# EUROPEAN PATENT SPECIFICATION

(11) **EP 2 797 808 B1**
(45) Date of publication and mention of the grant of the patent: **18.11.2026**
(21) Application number: 12846789.1
(22) Date of filing: 26.12.2012
(51) Int. Cl.: B62M 7/12, B62K 11/10

(54) **VEHICLE**
FAHRZEUG
VÉHICULE

(30) Priority: 27.12.2011 IN 4585CH2011
(43) Date of publication of application: 05.11.2014
(73) Proprietor: TVS Motor Company Limited, Chennai 600006 (IN)
(72) Inventor: SASIKUMAR, R., Chennai 600006 (IN); RAO, Kandregula Srinivasa, Chennai 600006 (IN); K, Venkata Mangaraju, Chennai 600006 (IN); NAGARAJA, Krishnabhatta, Chennai 600006 (IN); BABU, Rengarajan, Chennai 600006 (IN)
(74) Representative: Patentanwaltskanzlei Matschnig & Forsthuber OG
(86) International application number: PCT/IN2012/000849
(87) International publication number: WO 2013/111151

(56) References cited:
- EP-A1- 1 584 549
- EP-A2- 0 581 318
- WO-A1-2011/101908
- GB-A- 952 888
- JP-A- 2009 226 986
- JP-U- S6 448 395
- US-A1- 2011 046 831
- US-B1- 6 453 762

## Description

### FIELD OF THE INVENTION

The subject matter described herein, in general, relates to a two wheeler vehicle provided with an automated manual transmission equipped engine (AMT engine).

### BACKGROUND

There have been various types of two - wheeled vehicles. One such type of vehicle is a small motor scooter. Such motor scooters are provided with a floor board portion where the rider rest his feet and is provided with swinging power unit with a continuously variable transmission (CVT). This motor scooter is preferred more over the motorcycle type of vehicle for its convenience of ride which does not include the hassle of clutch operation or gear shifting. However, certain motor scooters are geared scooters, in this type of vehicle the transmission from the crankshaft to wheel shaft is through multiple set of gears. Even though the geared scooter provides relatively better fuel economy, these type of vehicles are not preferred by users due to hassles of manual clutch operation and gear shifting especially in traffic condition.

Since the motor scooters are having CVT, due to belt slippage, hysteresis loss and transmission losses, the fuel efficiency of such scooters are generally less than that of a geared motorcycle. Further, the continuous running of the belt leads to increase in temperature and thereby resulting in poor life of belt.

Hence there is a need for a vehicle which retains the convenience of ride (no manual gear shifting) of a motor scooter and simultaneously achieves the fuel economy benefit of the geared vehicle.

The motor scooters invariably employ body panels covering the engine and frame tubes and wiring harness for providing a neat shape to the scooter and for protection of its parts and also for aesthetic appeal. Of course when the engine is covered with such body panels, it is necessary to have adequate cooling system for cooling the engine. Normally such cooling requires the use of engine driven fan due to the enclosed configuration of the body. In order to provide more efficient cooling and to ensure adequate cooling, it has been a practice to employ forced cooling. However, forced cooling system consumes a portion of the power generated by the engine and hence affects the fuel economy of the vehicle.
EP 0 581 318 A2, which shows the preamble of the independent claims, discloses a frame structure for a motorcycle, having a suspension structure including chassis side brackets, engine side brackets, connected by links; engine side brackets are formed separately from, but connectable to, the unit swing-type engine. Other frame structures are described in JP 2009-226966 A and JP S64-48395 U.

Therefore, it is an object of the present invention to overcome the above problems and provide an arrangement of AMT engine in two wheeler.

### SUMMARY

The invention is directed at a scooter-type vehicle as claimed in claims 1 and 2. The dependent claims describe optional features of the invention.

An object of the present invention is to substantially eliminate the problem associated or drawbacks encountered in the prior art described above and to make it possible to mount an AMT engine swing arm to the frame of scooter type vehicle.

Another object of the present invention is to mount the AMT engine to a carrier and achieve maximum utility space.

Another object of the present invention is to mount the AMT engine to the vehicle as a part of load carrying member.

Another object of the present invention is to mount the AMT engine to a carrier and achieve a better ground clearance.

Yet another object of the present invention is to reduce vibration transmission significantly.

Another object of the present invention is to improve the durability of the chain with constant tension drive.

Further object of the present invention is to provide ease in serviceability of the engine without removing the wheel.

Another object of the present invention is to provide shorter wheel base, keeping the vehicle length and weight less thereby improving the handling of the vehicle.

Another object of the present invention is to provide to a modular unit of engine including induction, exhaust systems, center stand and like mounted to the single carrier whereby it reduces the assembly time significantly.

Further object of the present invention is to provide convenience of riding with improved fuel efficiency.

Yet further object of the present invention is to provide improved fuel efficiency by· eliminating use of primary clutch in AMT engine, which otherwise results in loss of fuel due to continuous slipping of centrifugal clutch.

Yet another object of the present invention is to provide sufficient foot space as in the conventional scooter with low floor board portion and thereby retaining the ability to get on and off easy onto the vehicle.

Another object of the present invention is to provide an AMT engine in a step thru vehicle.

Another object of the present invention is to provide an AMT engine in a single cylinder motorcycle.

Further scope of applicability of the present invention will become apparent from the detailed description given hereinafter.

### BRIEF DESCRIPTION OF THE DRAWINGS

The present invention will become more fully understood from the detailed description given herein below and the accompanying drawings which are given by way of illustration only, and thus are not limitative of the present invention, and wherein
Figure 1 shows a conventional scooter type vehicle.
Figure 2 shows scooter type vehicle with the AMT controller according to the first embodiment of the present invention.
Figure 3 shows scooter type vehicle according to one aspect of the first embodiment of the present invention.
Figure 4 shows scooter type vehicle according to another aspect of the first embodiment of the present invention.
Figure 5 shows carrier according to the present invention.
Figure 6 shows step thru vehicle with the AMT controller according to the second embodiment, which is not claimed.
Figure 7 shows motorcycle with the AMT controller according to the third embodiment, which is not claimed.

### DETAILED DESCRIPTION

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art. The invention is defined by the independent claims, and preferred embodiments by the dependent claims.

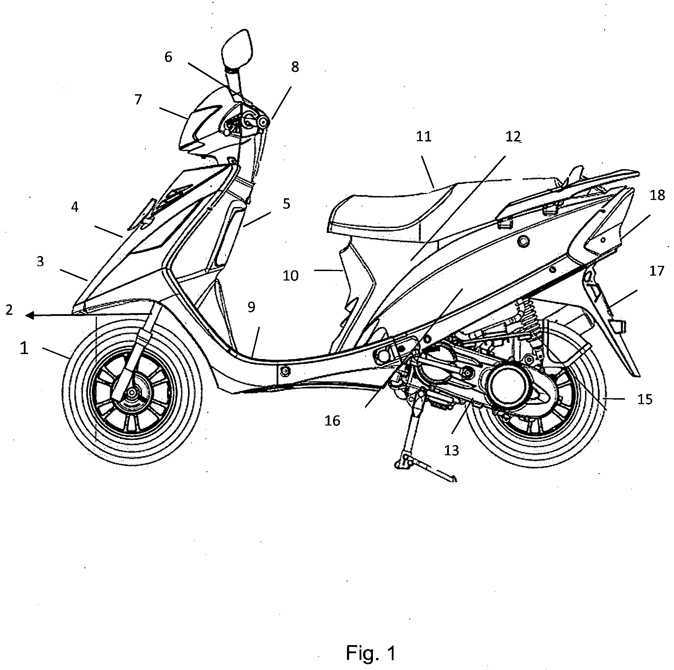

With reference to Figure 1,1 denotes a front wheel, 2 denotes a front fork, 3 denotes a front fender, 4 denotes a front cover, 5 denotes a leg shield made of resin or metal, 6 denotes a handle bar cover, 7 denotes a headlight, 8 denotes a handle bar ,17 denotes a rear-fender and 18 denotes tail lamp.

The centre of the body forms a low floor board 9 for functioning as a part for putting feet and a under cowl 10 which is located below the rider's seat and covers at least a part of the engine, The under cowl is made up of metal or resin. The under cowl is hinged to the seat 11. A utility box 12 opens from the rear end to hinged portion. The utility box 12 is provided under the seat extending longitudinally of a vehicle body and the inside of the utility box has a large capacity so that a large article can be housed. A main frame 14 extended along the center of the body before and behind and made of a metallic pipe and is provided under the floor board 9. A swing type power unit 13 is coupled to the rear end of the main frame 14.

A rear wheel 15 is supported on one side of the rear end of the swing type power unit 13. The swing type power unit 13 is suspended in the rear of a body frame.

The side covers 16 both on left and right sides, covers the utility box 12 and other parts of the vehicle, thereby providing a good appearance to the vehicle.

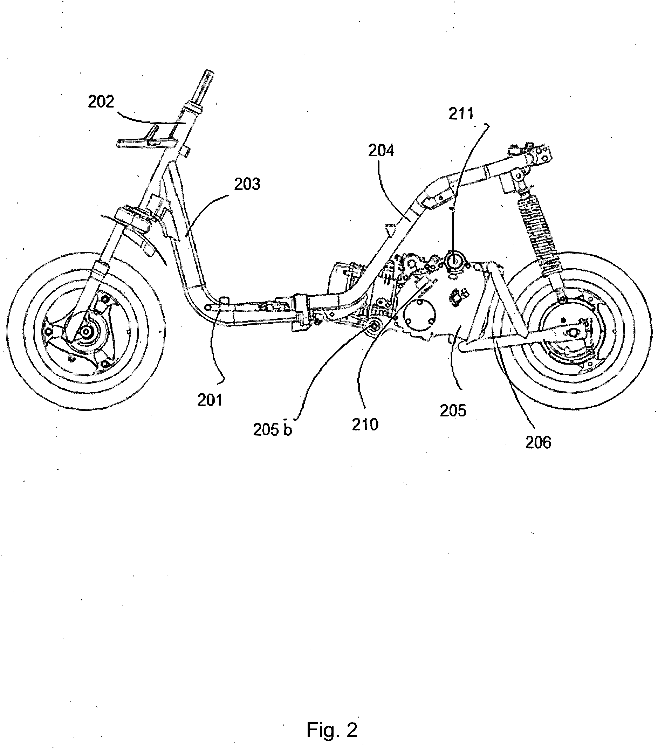

According to the first embodiment of the present invention and referring to figure 2, a low floor type board 201is positioned between the handle bar and seat. The scooter vehicle comprises a head pipe 202 and a main frame 203 extending downwardly and of the vehicle from the head pipe 202. At least two side frames 204 extending upwardly and rearwardly from the main frame 203 at low floor board portion 201. An automatic manual transmission equipped engine 205 disposed in the vicinity of the floor board portion 201. The said automatic manual transmission equipped engine 205 is provided with a clutch actuator 210 configured to actuate clutch and shift actuator 211 configured to shift the change gears. The said actuators are electronically controlled by an electronic control unit. The said AMT equipped engine 205 is preferably a single cylinder horizontal engine. The AMT engine 205 is not restricted by horizontal engine only can be of various angular orientations such as vertical engine and like retaining the advantages of the present invention for scooter vehicle. The said AMT equipped engine 205 is mounted swing ably to the scooter vehicle.

Further in another aspect of the preferred first embodiment, the said AMT engine 205 is used as a part of load carrying member, wherein the front end of the said engine crankcase 205 a is swing ably mounted to the side frames 204 either directly or indirectly, such that the hinge point of the crankcase 205 b is substantially towards the front of the engine. The indirect connection of the said AMT engine 205 is through a connecting link which is preferably a toggle link. The rear part of the said AMT engine 205 is mounted to a swing member 206 which holds the rear wheel of the vehicle. The said swing member 206 enables the fitment of atleast one shock absorber(s).

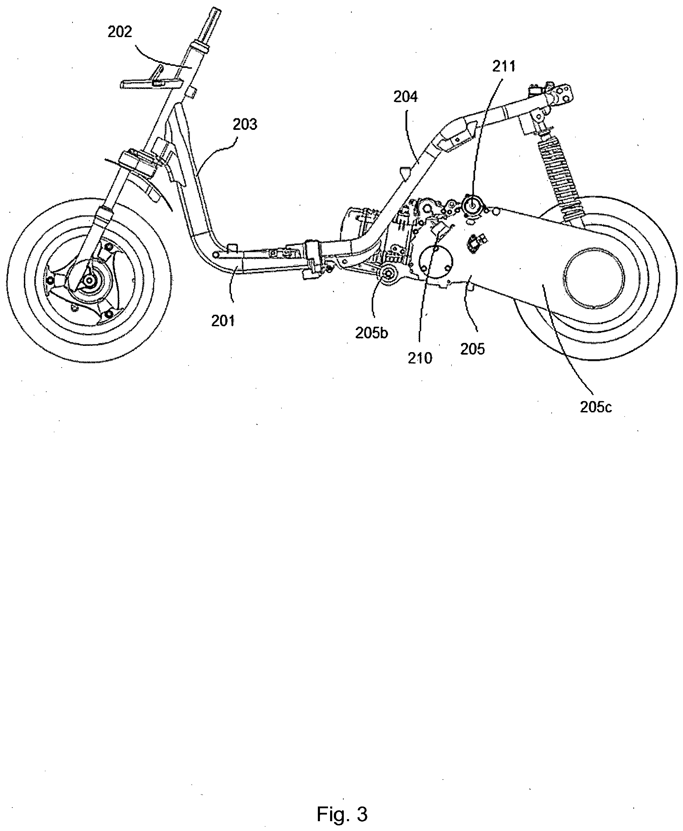

Yet in another aspect of the preferred first embodiment and referring to figure 3, the said AMT engine 205 is used as a part of load carrying member, wherein the front end of the said engine crankcase is mounted to the side frames either directly or indirectly. The indirect connection of the said AMT engine 205 is through a connecting link which is preferably a toggle link. The rear part of the said AMT engine 205 is provided with an extension 205c mounted to the rear wheel of the vehicle. The said extension 205c enables the fitment of atleast one shock absorber(s). Drive from crankshaft to the rear wheel can be through set of gears.

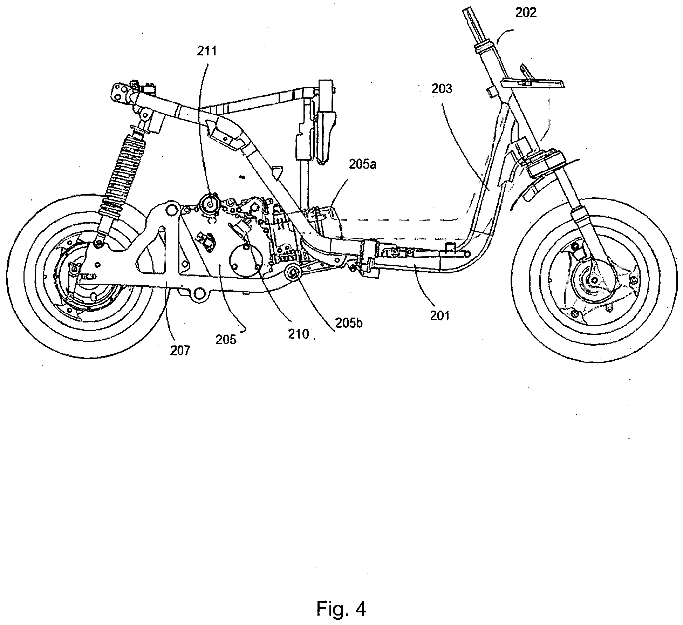

Another aspect of first embodiment of the present invention and referring to figure 4, the said AMT engine 205 is mounted to a carrier member 207. The front end of the said carrier member is mounted to the side frame (s) directly or indirectly such that the hinge point of the carrier member is substantially towards the front of the engine and the rear end of the said carrier member 207 is mounted to rear wheel. The indirect connection of the said AMT engine 205 is through a connecting link which is preferably a toggle link. The AMT equipped engine 205 is mounted rigidly to the carrier member 207 and swings along with the said carrier member 207. The said AMT engine 205 is placed above the said carrier member 207. A predetermined clearance height is maintained between the engine and road surface by virtue of wheel size and carrier member mounting point to the side frames.

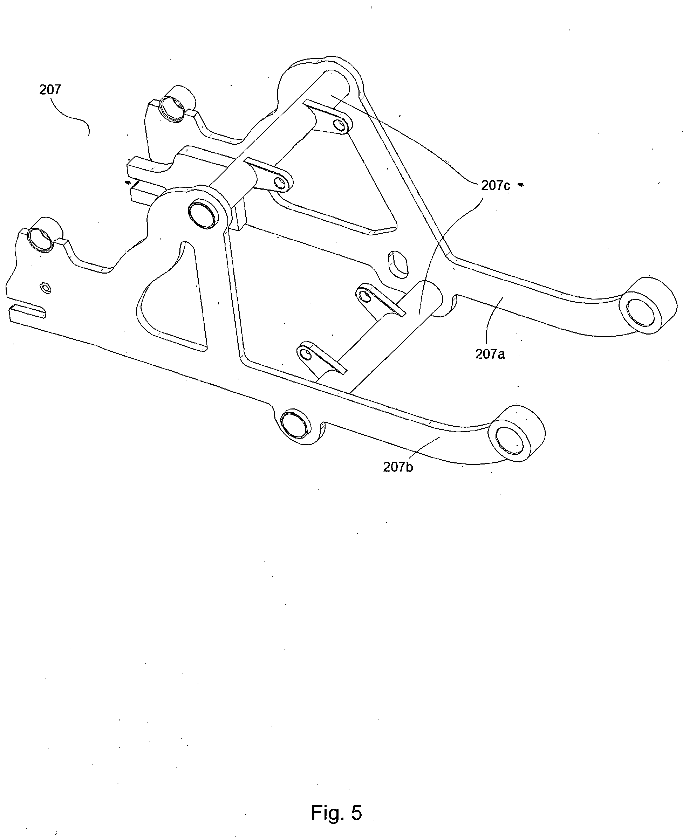

Referring to figure 5, the said carrier member 207 has a pair of symmetrical arms 207a, 207 b and is provided with plurality of mounting provisions for mounting engine, rear wheel, shock absorber, center stand, air filter, muffler, rear fender and some engine electrical components.

The carrier 207 is provided with plurality of cross bridges 207c whereby it provides a ladder shaped construction of the said carrier.

The carrier member 207 is provided with a provision of mounting at least one shock absorber near to the rear wheel axle mounting point.

Similarly, mounting provisions are provided on the both arms of the carrier member for mounting muffler air filter, chain cover and also center stand. The carrier member 207 is preferably a cast or fabricated member

The front and rear wheel rim size for said scooter type vehicle is preferably a combination in the range of 200 millimeters to 400 millimeters (or 8 to 16 inches).

Among various cooling means, one preferred means for the said AMT engine 205 includes providing air directing means from front panel of the scooter vehicle. Another cooling means can be a liquid cooling means. In case where the scooter vehicle is stationary and the engine is idling or insufficient air to the engine, there is a need to cool down the said AMT engine 205. In such particular cases and according to the present invention an electrically driven fan is provided which can be selectively operated manually or automatically.

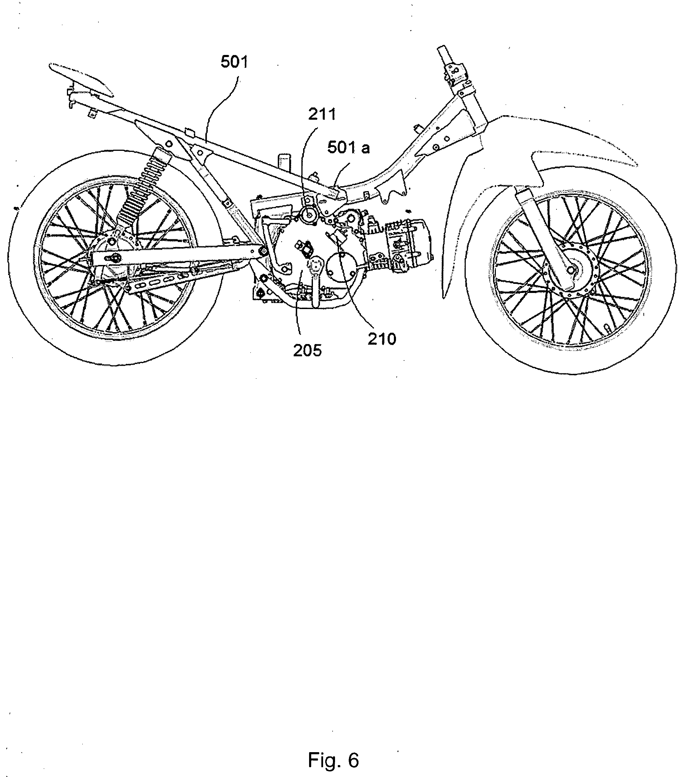

In the second embodiment, which is not claimed, and referring to figure 6, a step thru vehicle comprises a main frame 501 running frontwards and rearwards along the vehicle body having a step thru portion 501 a between rider seat and handle bar; and an automated manual transmission equipped engine 205 disposed below the step thru portion 501 a. The said automatic manual transmission equipped engine 205 is provided with a clutch actuator 210 configured to actuate clutch and shift actuator 211 configured to shift the change gears. The said actuators are electronically controlled by an electronic control unit. The front and rear wheel rim size for step thru vehicle is preferably a combination in the range of 350 millimeters to 425 millimeters (or 14 to 17 inches.)

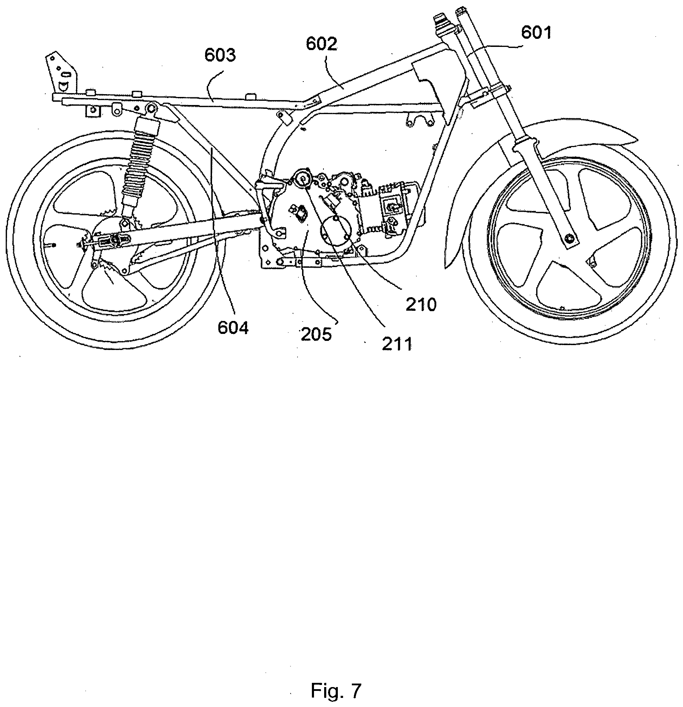

According to the third embodiment, which is not claimed, and referring to figure 7, a single cylinder 4 stroke motorcycle vehicle comprises a head pipe 601 and a main frame 602 extending backwardly and obliquely from the head pipe 601. Two upper frames 603 extending backwards from main frame and two side frames 604 extending from the main tube rearwardly and upwardly. An automated manual transmission equipped engine 205 is fixedly mounted to main frame below fuel tank. The said automatic manual transmission equipped engine 205 is provided with a clutch actuator 210 configured to actuate clutch and shift actuator 211 configured to shift the change gears. The said actuators are electronically controlled by an electronic control unit. A predetermined clearance height is maintained between the said engine and road surface.

In all the above preferred embodiments, the drive from the AMT engine 205 final output shaft to the rear wheel can be a belt drive or chain drive with a known reduction ratio. Since the chain drive is generally noisy in comparison to belt drive, it is preferable to use a toothed belt for the rear wheel drive.

The said AMT engine 205 for all above preferred embodiments is designed with the parts like actuators and other related parts which are required for clutch and gear operation and are contained within the AMT engine 205 or mounted on the engine 205 directly.

## Claims

1. A scooter type vehicle comprising:
a low framework structure body frame having a floor board portion (201);
an automatic manual transmission-equipped engine (205) having:
an electronically controlled clutch actuator (210) and
a shift actuator (211),
said electronically controlled clutch actuator (210) and said shift actuator (211) being contained within said automatic manual transmission-equipped engine (205),
wherein said automatic manual transmission-equipped engine (205) is mounted swingably to said vehicle and disposed in the vicinity of the floor board portion (201); and
a carrier member (207) configured to connect the low framework structure body frame to a rear wheel;
wherein a predetermined clearance height is maintained between the automatic manual transmission-equipped engine (205) and a road surface,
**characterized in that**
said automatic manual transmission equipped engine (205) has a single cylinder and is mounted horizontally and rigidly to the carrier member (207),
wherein a front end of said carrier member (207) is connected indirectly to one or more side frames of said low framework structure body frame of the scooter-type vehicle through a toggle link, when said carrier member (207) is mounted in said scooter-type vehicle; and wherein said predetermined clearance height is maintained by means of a front wheel rim and a rear wheel rim having a wheel rim size preferably a combination in the range of 200 mm to 400 mm.

2. A scooter type vehicle comprising:
a low framework structure body frame having a floor board portion (201);
an automatic manual transmission-equipped engine (205) having:
an electronically controlled clutch actuator (210) and
a shift actuator (211),
said electronically controlled clutch actuator (210) and said shift actuator (211) being contained within said automatic manual transmission-equipped engine (205),
wherein said automatic manual transmission-equipped engine (205) is mounted swingably to said vehicle and disposed in the vicinity of the floor board portion (201); wherein a predetermined clearance height is maintained between the automatic manual transmission-equipped engine (205) and a road surface,
**characterized in that**
said automatic manual transmission equipped engine (205) has a single cylinder and is mounted horizontally, and includes a front end mounted to one or more side frames (204) of said low framework structure body frame and a rear part mounted on a swing member (206) to connect with a rear wheel; and
wherein said predetermined clearance height is maintained by means of a front wheel rim and a rear wheel having a wheel rim size preferably a combination in the range of 200 mm to 400 mm.

3. The vehicle as claimed in claim 2, wherein the front end is connected directly to the one or more side frames (204) of the vehicle.

4. The vehicle as claimed in claim 1 or 2, wherein the said automatic manual transmission equipped engine (205) is cooled by one of liquid cooling means, and electrically driven fan selectively operated manually or automatically.

5. The vehicle as claimed in claim 1, wherein said floor board portion (201) is positioned between a front wheel and a cylinder head of said engine (205).

6. The vehicle as claimed in claim 1, wherein said carrier member (207) is a swinging member having plurality of mounting points for mounting said engine (205), a muffler, a shock absorber, an air cleaner, a chain cover and like components.

7. The vehicle as claimed in claim 1, wherein said carrier member (207) is configured to accommodate at least one shock absorber mounting provision.

8. The vehicle as claimed in claim 1, wherein said carrier member (207) is one of a fabricated member, and a cast member.

9. The vehicle as claimed in claim 1, wherein said carrier member (207) has a ladder shaped structure.

10. The vehicle according to any of the preceding claims, wherein said automatic manual transmission equipped engine (205) is provided with a chain drive for transmitting the power from said engine to the rear wheel.

## Patentansprüche

1. Fahrzeug vom Scooter-Typ, aufweisend:
einen Rahmenkörper niedriger Rahmenkonstruktion mit einem Trittbrettabschnitt (201);
einen mit einem automatisierten Schaltgetriebe ausgestatteten Motor (205) mit:
einem elektronisch gesteuerten Kupplungsaktuator (210) und
einem Schaltaktuator (211),
wobei der elektronisch gesteuerte Kupplungsaktuator (210) und der Schaltaktuator (211) in dem mit einem automatisierten Schaltgetriebe ausgestatteten Motor (205) enthalten sind,
wobei der mit einem automatisierten Schaltgetriebe ausgestattete Motor (205) schwenkbar an dem Fahrzeug angebracht und in der Nähe des Trittbrettabschnitts (201) angeordnet ist; und
ein Trägerelement (207) zum Verbinden des niedrigen Rahmenkörpers mit einem Hinterrad;
wobei zwischen dem mit einem automatisierten Schaltgetriebe ausgestatteten Motor (205) und einer Fahrbahnoberfläche eine vorbestimmte Bodenfreiheit eingehalten wird,
**dadurch gekennzeichnet, dass**
der mit einem automatisierten Schaltgetriebe ausgestattete Motor (205) einen einzigen Zylinder aufweist und horizontal sowie starr an dem Trägerelement (207) befestigt ist,
wobei ein vorderes Ende des Trägerelements (207) indirekt über ein Kniegelenk mit einem oder mehreren Seitenrahmen des Rahmenkörpers niedriger Rahmenkonstruktion des Fahrzeugs vom Scooter-Typ verbunden ist, wenn das Trägerelement (207) in dem Fahrzeug montiert ist; und wobei die vorbestimmte Bodenfreiheit mittels einer Vorderradfelge und einer Hinterradfelge mit einer Felgengröße vorzugsweise einer Kombination im Bereich von 200 mm bis 400 mm eingehalten wird.

2. Fahrzeug vom Scooter-Typ, aufweisend:
einen Rahmenkörper niedriger Rahmenkonstruktion mit einem Trittbrettabschnitt (201);
einen mit einem automatisierten Schaltgetriebe ausgestatteten Motor (205) mit:
einem elektronisch gesteuerten Kupplungsaktuator (210) und
einem Schaltaktuator (211),
wobei der elektronisch gesteuerte Kupplungsaktuator (210) und der Schaltaktuator (211) in dem mit einem automatisierten Schaltgetriebe ausgestatteten Motor (205) enthalten sind,
wobei der mit einem automatisierten Schaltgetriebe ausgestattete Motor (205) schwenkbar an dem Fahrzeug angebracht und in der Nähe des Trittbrettabschnitts (201) angeordnet ist;
wobei zwischen dem mit einem automatisierten Schaltgetriebe ausgestatteten Motor (205) und einer Fahrbahnoberfläche eine vorbestimmte Bodenfreiheit eingehalten wird,
**dadurch gekennzeichnet, dass**
der mit einem automatisierten Schaltgetriebe ausgestattete Motor (205) einen einzigen Zylinder aufweist und horizontal montiert ist, und ein vorderes Ende, das an einem oder mehreren Seitenrahmen (204) des Rahmenkörpers niedriger Rahmenkonstruktion befestigt ist, sowie einen hinteren Teil, der an einem Schwenkelement (206) zur Verbindung mit einem Hinterrad angebracht ist, aufweist; und
wobei die vorbestimmte Bodenfreiheit mittels einer Vorderradfelge und eines Hinterrads mit einer Felgengröße vorzugsweise einer Kombination im Bereich von 200 mm bis 400 mm, eingehalten wird.

3. Fahrzeug nach Anspruch 2, wobei der vordere Teil direkt mit dem bzw. den Seitenrahmen (204) des Fahrzeugs verbunden ist.

4. Fahrzeug nach Anspruch 1 oder 2, wobei der mit einem automatisierten Schaltgetriebe ausgestattete Motor (205) gekühlt wird durch eines von einer Flüssigkeitskühlung und einem elektrisch angetriebenen Lüfter, der wahlweise manuell oder automatisch betätigt wird.

5. Fahrzeug nach Anspruch 1, wobei der Bodenplattenabschnitt (201) zwischen einem Vorderrad und einem Zylinderkopf des Motors (205) angeordnet ist.

6. Fahrzeug nach Anspruch 1, wobei das Trägerelement (207) ein Schwenkelement ist, das mehrere Befestigungspunkte zur Befestigung des Motors (205), eines Schalldämpfers, eines Stoßdämpfers, eines Luftfilters, einer Kettenabdeckung und ähnlicher Komponenten aufweist.

7. Fahrzeug nach Anspruch 1, wobei das Trägerelement (207) zum Aufnehmen zumindest einer Befestigungsvorrichtung für einen Stoßdämpfer eingerichtet ist.

8. Fahrzeug nach Anspruch 1, wobei das Trägerelement (207) entweder ein geformtes Element oder ein Gussteil ist.

9. Das Fahrzeug nach Anspruch 1, wobei das Trägerelement (207) eine leiterförmige Struktur hat.

10. Fahrzeug nach einem der vorangehenden Ansprüche, wobei der mit einem automatisierten Schaltgetriebe ausgestattete Motor (205) mit einem Kettentrieb zur Übertragung der Antriebskraft vom Motor auf das Hinterrad versehen ist.

## Revendications

1. Véhicule de type scooter comprenant :
un châssis à structure basse comportant une partie plancher (201) ;
un moteur (205) équipé d'une boîte de vitesses manuelle automatique, comportant :
un actionneur d'embrayage à commande électronique (210) et
un actionneur de changement de vitesse (211),
ledit actionneur d'embrayage à commande électronique (210) et ledit actionneur de changement de vitesse (211) étant logés à l'intérieur dudit moteur équipé d'une boîte de vitesses manuelle automatisée (205),
ledit moteur équipé d'une boîte de vitesses manuelle automatisée (205) étant monté pivotant audit véhicule et disposé à proximité de la partie plancher (201) ; et
un élément de support (207) configuré pour relier le châssis à structure basse à une roue arrière ;
une garde au sol prédéterminée étant maintenue entre le moteur équipé d'une boîte de vitesses manuelle automatique (205) et la chaussée,
**caractérisé en ce que**
ledit moteur équipé d'une boîte de vitesses manuelle automatique (205) comporte un seul cylindre et est monté horizontalement et de manière rigide sur l'élément de support (207),
une extrémité avant dudit élément de support (207) étant reliée indirectement à un ou plusieurs châssis latéraux dudit châssis à structure basse du véhicule de type scooter par l'intermédiaire d'une biellette, lorsque ledit élément de support (207) est monté dans ledit véhicule de type scooter ; et
ladite garde au sol prédéterminée étant maintenue au moyen d'une jante de roue avant et d'une jante de roue arrière dont la taille est de préférence une combinaison comprise dans la plage de 200 mm à 400 mm.

2. Véhicule de type scooter comprenant :
un châssis à structure basse comportant une partie plancher (201) ;
un moteur (205) équipé d'une boîte de vitesses manuelle automatisée, comportant :
un actionneur d'embrayage à commande électronique (210) et
un actionneur de changement de vitesse (211),
ledit actionneur d'embrayage à commande électronique (210) et ledit actionneur de changement de vitesse (211) étant logés à l'intérieur dudit moteur équipé d'une boîte de vitesses manuelle automatisée (205),
ledit moteur équipé d'une boîte de vitesses manuelle automatisée (205) étant monté pivotant audit véhicule et disposé à proximité de la partie plancher (201) ;
une garde au sol prédéterminée étant maintenue entre le moteur équipé d'une boîte de vitesses manuelle automatique (205) et la chaussée,
**caractérisé en ce que**
ledit moteur équipé d'une boîte de vitesses manuelle automatique (205) comporte un seul cylindre et est monté horizontalement, et inclut une partie avant montée sur un ou plusieurs châssis latéraux (204) dudit châssis à structure basse et une partie arrière montée sur un élément pivotant (206) destiné à se raccorder à une roue arrière ; et
ladite hauteur de garde au sol prédéterminée étant maintenue au moyen d'une jante de roue avant et d'une roue arrière dont la taille de jante est de préférence comprise une combinaison dans la plage de 200 mm à 400 mm.

3. Véhicule selon la revendication 2, dans lequel l'extrémité avant est reliée directement audit ou auxdits châssis latéraux (204) du véhicule.

4. Véhicule selon la revendication 1 ou 2, dans lequel ledit moteur (205) équipé d'une boîte de vitesses manuelle automatique est refroidi par l'un d'un système de refroidissement par liquide et un ventilateur à entraînement électrique actionné, de manière sélective, manuellement ou automatiquement.

5. Véhicule selon la revendication 1, dans lequel ladite partie de plancher (201) est positionnée entre une roue avant et une culasse dudit moteur (205).

6. Véhicule selon la revendication 1, dans lequel ledit élément de support (207) est un élément pivotant comportant une pluralité de points de fixation destinés à fixer ledit moteur (205), un silencieux, un amortisseur, un filtre à air, un carter de chaîne et des composants similaires.

7. Véhicule selon la revendication 1, dans lequel ledit élément de support (207) est configuré pour recevoir au moins un dispositif de fixation d'amortisseur.

8. Véhicule selon la revendication 1, dans lequel ledit élément de support (207) est soit un élément fabriqué, soit un élément moulé.

9. Véhicule selon la revendication 1, dans lequel ledit élément de support (207) présente une structure en forme d'échelle.

10. Véhicule selon l'une quelconque des revendications précédentes, dans lequel ledit moteur (205) équipé d'une boîte de vitesses manuelle automatique est muni d'une transmission par chaîne destinée à transmettre la puissance dudit moteur à la roue arrière.
